# FASCICULE DE BREVET EUROPEEN

(11) **EP 1 837 238 B1**
(45) Date de publication et mention de la délivrance du brevet: **17.02.2010**
(21) Numéro de dépôt: 07290350.3
(22) Date de dépôt: 22.03.2007
(51) Int. Cl.: B60R 5/04, B29C 44/14

(54) **Composant structurel de garnissage de véhicule automobile comprenant un joint périphérique formé par imprégnation de mousse**
Strukturelles Innenausstattungsbauteil für Kraftfahrzeug, das eine umlaufende Dichtungsfuge umfasst, die mittels Schaumimprägnierung gebildet ist
Structural trim component of an automobile comprising a peripheral joint formed by impregnation of foam

(30) Priorité: 23.03.2006 FR 0602535
(43) Date de publication de la demande: 26.09.2007
(73) Titulaire: CENTRE D'ETUDE ET RECHERCHE POUR L'AUTOMOBILE ( CERA), 51100 Reims (FR)
(72) Inventeur: Brillon, Eric, 51140 Chalons sur Vesle (FR); Moncuy, Franck, 51500 Nogent-Sermiers (FR)
(74) Mandataire: Sayettat, Julien Christian

(56) Documents cités:
- DE-A1- 19 814 956
- FR-A1- 2 864 922
- US-A- 4 555 141
- US-A- 4 878 827

## Description

L'invention concerne un composant structurel de garnissage de véhicule automobile et un procédé de réalisation d'un tel composant.

Il est connu, du document FR-2 864 922, de réaliser un composant structurel de garnissage de véhicule automobile, tel qu'une tablette arrière, ledit composant comprenant une âme en mousse sensiblement rigide et deux peaux surmoulées de part et d'autre de ladite âme, lesdites peaux étant partiellement poreuses à la mousse de sorte à être rigidifiées par une pénétration partielle de la mousse dans leur épaisseur.

Le même document propose que le composant comprenne en outre une bavette rabattue en périphérie dudit composant, pour former finition périphérique.

Une telle réalisation nécessite une opération de reprise visant à associer la bavette au composant, par exemple par collage, ce qui complexifie la réalisation dudit composant.

L'invention a pour objet de proposer un composant présentant une finition périphérique de réalisation simplifiée.

A cet effet, et selon un premier aspect, l'invention propose un composant structurel de garnissage de véhicule automobile comprenant deux coques de matériau de revêtement disposées sensiblement l'une contre l'autre en leur périphérie de sorte à définir un espace interne, ledit espace étant rempli d'une mousse sensiblement rigide formant une âme surmoulant la face interne desdites coques, l'une au moins desdites coques étant à base de matériau partiellement poreux à la mousse, au moins une partie de ladite périphérie d'au moins l'une desdites coques comprenant un rebord rentrant et autoportant, la face interne dudit rebord étant surmoulée par ladite âme et sa face externe étant disposée sensiblement contre ladite périphérie de l'autre desdites coques, la porosité dudit matériau poreux étant agencée de sorte à permettre la pénétration de mousse entre ladite face externe dudit rebord et ladite périphérie de l'autre desdites coques, sur une partie de la largeur dudit rebord, de sorte à former un joint contribuant à l'association périphérique desdites coques entre elles.

De la sorte, l'association périphérique des coques entre elles est réalisée par une pénétration maîtrisée de la mousse dans la zone de contact entre les coques, ladite mousse formant un joint issu de l'âme du composant.

Aucune opération de reprise n'est donc nécessaire pour réaliser la finition périphérique du composant, ainsi qu'on le verra plus loin dans la description d'un procédé de fabrication dudit composant.

Selon un deuxième aspect, l'invention propose un procédé de réalisation d'un tel composant.

D'autres particularités et avantages de l'invention apparaîtront dans la description qui suit, faite en référence aux figures jointes dans lesquelles :
- la figure 1 est une vue en coupe d'un composant selon un mode de réalisation de l'invention,
- la figure 2 est une vue partielle de détail en coupe de la périphérie du composant représenté en figure 1,
- la figure 3 est une vue partielle en coupe d'un dispositif de réalisation d'une coque destinée à un composant selon l'invention, avant (a) et après (b) l'opération de thermoformage,
- les figures 4 sont une vue schématique en coupe de composants pourvus de médaillons, notamment à base de textile, selon deux réalisations (a et b),
- la figure 5 est une vue schématique en coupe partielle d'un composant dans lequel une coque poreuse est à base d'un textile pourvu d'une couche d'envers en mousse souple.

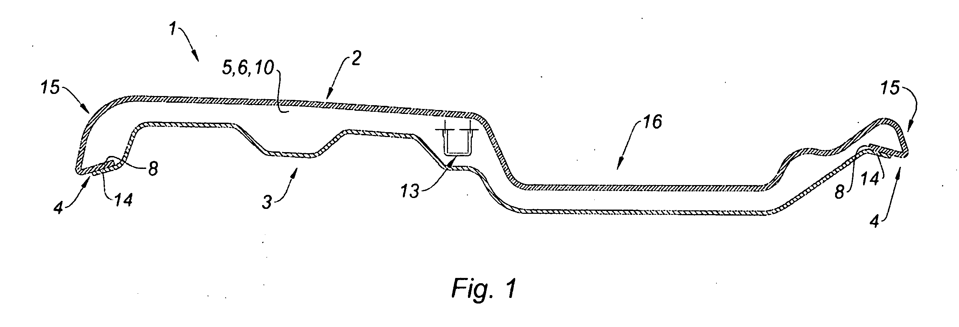

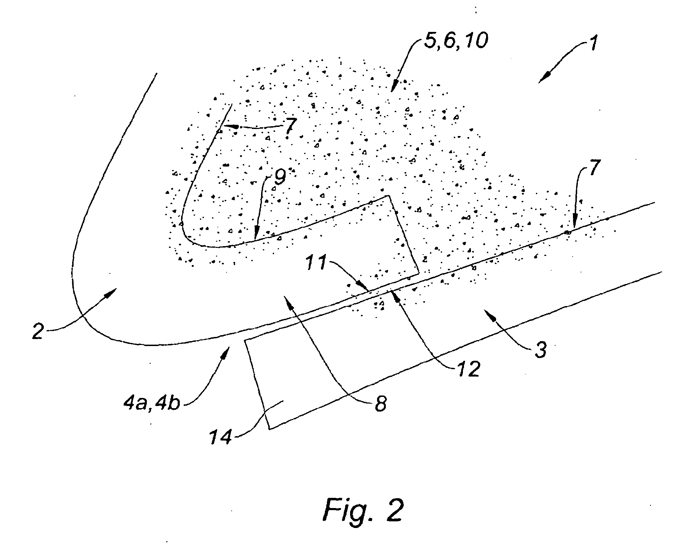

En référence aux figures 1 et 2, on décrit à présent un mode de réalisation d'un composant 1 structurel de garnissage de véhicule automobile comprenant deux coques 2,3 de matériau de revêtement disposées sensiblement l'une contre l'autre en leur périphérie 4a,4b de sorte à définir un espace interne 5, ledit espace étant rempli d'une mousse 6 sensiblement rigide, notamment à base de polyuréthanne, formant une âme 10 surmoulant la face interne 7 desdites coques, lesdites coques étant à base de matériau partiellement poreux à la mousse.

En variante non représentée, une seule coque 2,3 peut être poreuse, l'invention pouvant être aussi menée dans ces conditions.

Selon la réalisation représentée, la périphérie 4a de la coque 2, comprend un rebord 8 rentrant et autoportant, la face interne 9 dudit rebord étant surmoulée par l'âme 10 et sa face externe 11 étant disposée sensiblement contre la périphérie 4b de la coque 3.

En variante, le rebord 8 rentrant et autoportant pourrait être disposé seulement sur une partie de la périphérie 4a de la coque 2.

Le fait que le rebord 8 soit autoportant permet de garantir son appui sensiblement contre la périphérie 4b de la coque 3.

La porosité du matériau poreux est agencée de sorte à permettre la pénétration de mousse 6, pendant son expansion lors de la réalisation de l'âme 10, entre la face externe 11 et la périphérie 4b de la coque 3, sur une partie de la largeur du rebord 8, de sorte à former un joint 12 contribuant à l'association périphérique de coques 2,3 entre elles.

On notera que la porosité du matériau poreux permet un passage des gaz, issus de la mousse 6 en expansion, entre les coques 2,3, ce qui contribue à faciliter la formation du joint 12.

Le fait que le joint 12 ne s'étende pas au delà de la périphérie 4b de la coque 3, ce qui aurait pour effet de dégrader la finition périphérique du composant 1, peut être expliqué par le fait que la mousse 6, après avoir imprégné le matériau poreux lors de son expansion, forme ensuite une barrière empêchant la mousse de se propager davantage, et ceci d'autant plus que la mousse durcit au fur et à mesure de son expansion. En outre, cette étanchéité est également favorisée par le caractère autoportant du rebord 8, celui-ci assurant un plaquage sensiblement uniforme au niveau du plan de joint entre les coques 2, 3.

Selon la réalisation représentée, les deux coques 2,3 sont à base de matériau poreux et sont imprégnées partiellement dans leur épaisseur par la mousse 6, de sorte à les rigidifier.

Selon la réalisation représentée, la coque 2 comprend un rebord 8 rentrant et autoportant sur toute sa périphérie, la périphérie de la coque 3 comprenant un rebord saillant 14 contre lequel est disposé ledit rebord rentrant.

Selon la réalisation représentée, le rebord rentrant 8 formant un angle aigu avec la partie périphérique 15 de coque 2 qui lui est contiguë, une telle réalisation permettant d'obtenir une finition périphérique optimisée, dans le cas où la coque 2 forme la face d'aspect du composant 1 et la coque 3 sa face d'envers.

Selon la réalisation représentée, le composant 1 comprend un insert 13 surmoulé au moins en partie par la mousse 6, ledit insert pouvant servir à rigidifier ledit composant, notamment lorsqu'il est à base de profilé métallique.

De façon non représentée, l'insert peut traverser l'une des coques 2,3 par l'intermédiaire d'un orifice, une partie dudit insert étant surmoulée par la mousse 6 et l'autre partie étant saillante par rapport à ladite coque. Une telle réalisation peut concerner des inserts dont la partie saillante peut former moyen d'association au véhicule.

Selon la réalisation représentée, le composant 1 comprend une zone formant plumier 16 et des moyens d'association, non représentés, destinés à coopérer avec des moyens complémentaires prévus dans le compartiment à bagages du véhicule automobile de sorte à former tablette de recouvrement de bagages.

Selon une réalisation, le matériau poreux comprend 70 à 80% en poids de fibres et 30 à 20% en poids de liant, permettant la réalisation d'un rebord autoportant, sa résistance au passage de l'air étant supérieure à 1500 N.s.m⁻³, de sorte à éviter le passage de la mousse au travers dudit matériau, et inférieure à 3000 N.s.m⁻³, de sorte qu'il soit poreux aux gaz.

La porosité est notamment obtenue par calandrage à chaud, réalisé après ou au cours de la fabrication du matériau poreux à base de fibres.

Les fibres sont par exemple à base de verre, coton, lin, polyester, acrylique,....

L'utilisation de fibres à faible module, par exemple à base de polyester, est possible. Ainsi, des fibres de module de l'ordre de 200 mPa voient leur module passer à 500-800 mPa, voire d'avantage, après imprégnation par la mousse.

Selon une réalisation, la masse surfacique des coques 2,3 en matériau poreux est supérieure à 500 g/m², et leur épaisseur minimale est de 1 mm, de sorte à obtenir une autoportance et une porosité optimales.

La réalisation proposée permet, du fait de la rigidité des coques 2,3 une fois imprégnées de mousse, d'utiliser des mousses de polyuréthanne allégées, de densité voisine de 40g/1, contre des densités usuelles de 60 à 70 g/l utilisées dans ce type d'applications.

L'aspect de la mousse n'étant pas visible, il est possible d'utiliser des mousses de qualité moindre, donnant lieu éventuellement à des défauts de surface tels que des bulles, réalisées par exemple à partir de polyols d'origine végétale.

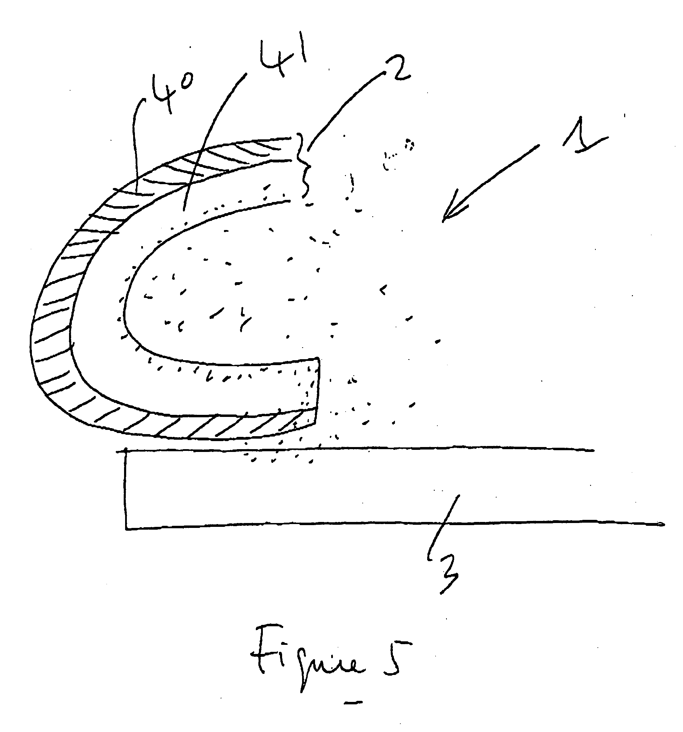

Selon une réalisation représentée en figure 5, une coque 2,3 poreuse est à base d'un textile 40 pourvu d'une couche d'envers 41 en mousse souple. La tranche de la coque 2,3 est rendue invisible du fait de la présence du rebord 8.

En variante, la couche d'envers 41 peut être à base de feutre, de non tissé,...

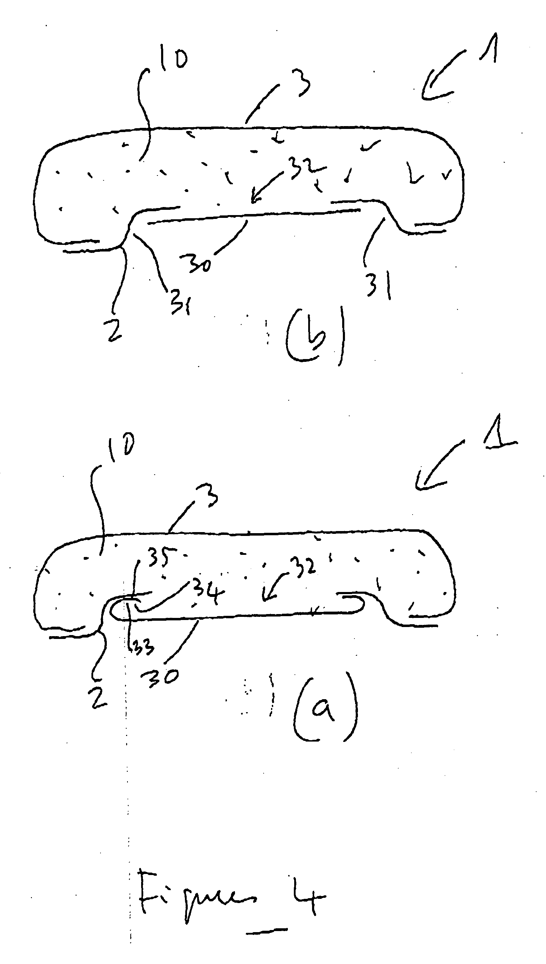

Comme représenté en figures 4, l'invention permet de réaliser un composant 1 dont une coque 2 est pourvue d'un médaillon décoratif 30, notamment à base d'un textile pourvu d'une couche d'envers, disposé sur un orifice 32 de ladite coque.

Les agencements représentés permettent de réaliser un masquage de la tranche du médaillon 30.

Selon la réalisation de la figure 4a, une coque 2 est pourvue d'un médaillon décoratif 30 disposé sur un orifice 32 de ladite coque, la périphérie dudit médaillon étant pourvue d'un rebord 34 rentrant et autoportant, la face interne 33 dudit rebord étant surmoulée par l'âme 10 et sa face externe 35 étant disposée sensiblement contre la périphérie dudit orifice.

Selon la réalisation de la figure 4b, une coque 2 est pourvue d'un médaillon décoratif 30, ledit médaillon étant disposé sur un orifice 32 de ladite coque dans un renfoncement périphérique 31 prévu sur la coque 2 recevant ledit médaillon.

On décrit à présent un procédé de réalisation d'un composant 1, ledit procédé comprenant les étapes suivantes :
- réaliser deux coques 2,3 dont au moins l'une d'entre elles comprend un rebord 8 rentrant et autoportant, l'une au moins desdites coques étant partiellement poreuse à la mousse 6,
- disposer lesdites coques contre les parois d'un moule et sensiblement l'une contre l'autre en leur périphérie 4 de sorte à définir un espace interne 5,
- injecter dans ledit espace un mélange précurseur de mousse 6 sensiblement rigide de sorte à former l'âme 10 et le joint 12,
- après expansion de ladite mousse, démouler le composant 1 obtenu.

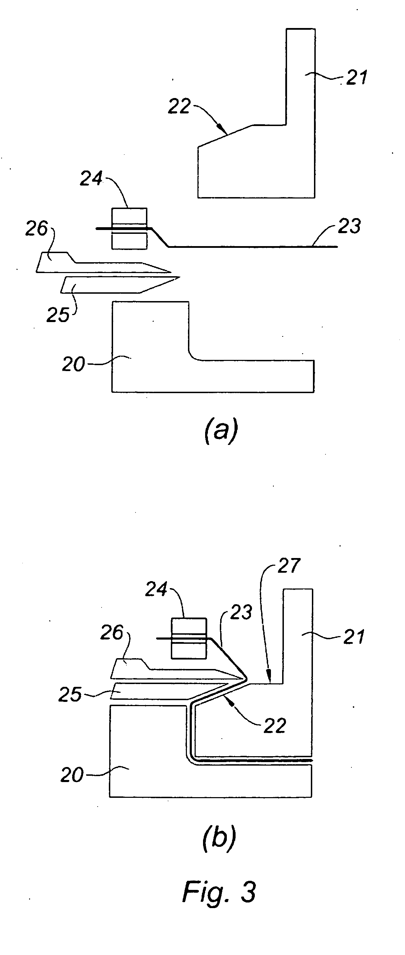

Selon une réalisation représentée en figure 3, l'étape de réalisation d'une coque 2,3 présentant un rebord 8 rentrant et autoportant comprend les étapes de :
- prévoir un moule de thermoformage comprenant une cuve 20 et un poinçon 21 de forme complémentaire, la périphérie supérieure 22 dudit poinçon formant un pan incliné définissant ledit rebord,
- prévoir un flan 23 de matériau apte à être thermoformé,
- disposer la périphérie dudit flan dans un serre-flan 24 et chauffer ledit flan à sa température de thermoformage,
- thermoformer ledit flan entre ledit poinçon et ladite cuve en plaquant, au moyen d'au moins un sabot 25 de placage, le pourtour dudit flan contre ladite périphérie supérieure dudit poinçon, de sorte à réaliser une tension dudit flan entre ledit serre-flan et ledit sabot,
- appliquer au moins une lame 26, notamment crantée, contre ledit flan en périphérie dudit sabot, un jeu 27 étant prévu derrière ledit flan à l'opposé de ladite lame, de sorte à détourer le flan 23 thermoformé, ladite lame traversant ledit flan en le découpant et pénétrant dans ledit jeu,
- retirer ledit sabot et ledit poinçon et démouler la coque 2,3 obtenue à partir dudit flan.

Une telle réalisation permet d'appliquer une pression limitée sur la lame 26 pour effectuer la découpe attendue, ceci du fait de la tension appliquée au flan 23 avant son détourage et de l'existence du jeu 27 disposé en lieu et place d'un billot.

## Revendications

1. Composant (1) structurel de garnissage de véhicule automobile comprenant deux coques (2,3) de matériau de revêtement disposées sensiblement l'une contre l'autre en leur périphérie (4a,4b) de sorte à définir un espace (5) interne, ledit espace étant rempli d'une mousse (6) sensiblement rigide formant une âme (10) surmoulant la face interne (7) desdites coques, l'une au moins desdites coques étant à base de matériau partiellement poreux à la mousse, ledit composant étant **caractérisé en ce qu'**au moins une partie de ladite périphérie d'au moins l'une desdites coques comprend un rebord (8) rentrant et autoportant, la face interne (9) dudit rebord étant surmoulée par ladite âme et sa face externe (11) étant disposée sensiblement contre la périphérie de l'autre desdites coques, la porosité dudit matériau poreux étant agencée de sorte à permettre la pénétration de la mousse entre ladite face externe dudit rebord et ladite périphérie de l'autre desdites coques, sur une partie de la largeur dudit rebord, de sorte à former un joint (12) contribuant à l'association périphérique desdites coques entre elles.

2. Composant (1) selon la revendication 1, au moins une coque (2,3) à base de matériau poreux étant imprégnée partiellement dans son épaisseur par la mousse (6), de sorte à la rigidifier.

3. Composant (1) selon la revendication 1 ou 2, la coque (2) comprenant un rebord (8) rentrant et autoportant sur toute sa périphérie, la périphérie de la coque (3) comprenant un rebord saillant (14) contre lequel est disposé ledit rebord rentrant.

4. Composant (1) selon la revendication 3, le rebord rentrant (8) formant un angle aigu avec la partie périphérique (15) de coque (2) qui lui est contiguë.

5. Composant (1) selon la l'une quelconque des revendications 1 à 4, ledit composant comprenant un insert (13) surmoulé au moins en partie par la mousse (6).

6. Composant (1) selon la revendication 5, l'insert traversant l'une des coques (2,3) par l'intermédiaire d'un orifice, une partie dudit insert étant surmoulée par la mousse (6) et l'autre partie étant saillante par rapport à ladite coque.

7. Composant (1) selon l'une quelconque des revendications 1 à 6, ledit composant comprenant une zone formant plumier (16) et des moyens d'association destinés à coopérer avec des moyens complémentaires prévus dans le compartiment à bagages du véhicule automobile de sorte à former tablette de recouvrement de bagages.

8. Composant (1) selon l'une quelconque des revendications 1 à 7, une coque (2,3) poreuse étant à base d'un textile (40) pourvu d'une couche d'envers (41) en mousse souple.

9. Composant (1) selon l'une quelconque des revendications 1 à 8, une coque (2) étant pourvue d'un médaillon décoratif (30) disposé sur un orifice (32) de ladite coque, la périphérie dudit médaillon étant pourvue d'un rebord (34) rentrant et autoportant, la face interne (33) dudit rebord étant surmoulée par l'âme (10) et sa face externe (35) étant disposée sensiblement contre la périphérie dudit orifice.

10. Composant (1) selon l'une quelconque des revendications 1 à 8, une coque (2) étant pourvue d'un médaillon décoratif (30), ledit médaillon étant disposé sur un orifice (32) de ladite coque dans un renfoncement périphérique (31) prévu sur la coque (2) recevant ledit médaillon.

11. Procédé de réalisation d'un composant (1) selon l'une quelconque des revendications précédentes, ledit procédé comprenant les étapes de :
• réaliser deux coques (2,3) dont au moins l'une d'entre elles comprend un rebord (8) rentrant et autoportant, l'une au moins desdites coques étant partiellement poreuse à la mousse (6),
• disposer lesdites coques contre les parois d'un moule et sensiblement l'une contre l'autre en leur périphérie (4) de sorte à définir un espace interne (5) ;
• injecter dans ledit espace un mélange précurseur de mousse (6) sensiblement rigide de sorte à former l'âme (10) et le joint (12),
• après expansion de ladite mousse, démouler le composant (1) obtenu.

12. Procédé selon la revendication 11, l'étape de réalisation d'une coque (2,3) présentant un rebord (8) rentrant et autoportant comprenant les étapes de :
• prévoir un moule de thermoformage comprenant une cuve (20) et un poinçon (21) de forme complémentaire, la périphérie supérieure (22) dudit poinçon formant un pan incliné définissant ledit rebord,
• prévoir un flan (23) de matériau apte à être thermoformé,
• disposer la périphérie dudit flan dans un serre-flan (24) et chauffer ledit flan à sa température de thermoformage,
• thermoformer ledit flan entre ledit poinçon et ladite cuve en plaquant, au moyen d'au moins un sabot (25) de placage, le pourtour dudit flan contre ladite périphérie supérieure dudit poinçon, de sorte à réaliser une tension dudit flan entre ledit serre-flan et ledit sabot,
• appliquer au moins une lame (26), notamment crantée, contre ledit flan en périphérie dudit sabot, un jeu (27) étant prévu derrière ledit flan à l'opposé de ladite lame, de sorte à détourer le flan (23) thermoformé, ladite lame traversant ledit flan en le découpant et pénétrant dans ledit jeu,
• retirer ledit sabot et ledit poinçon et démouler la coque (2,3) obtenue à partir dudit flan.

## Claims

1. Structural component (1) for lining a motor vehicle comprising two shells (2, 3) of covering material arranged substantially against one another in their periphery (4a, 4b) in such a way as to define an internal space(5), said space being filled with a substantially rigid foam (6) forming a core (10) overmoulding the internal face (7) of said shells, one at least of said shells being of a base of material partially porous to the foam, said component being **characterised in that** at least one portion of said periphery of at least one of said shells comprises a recessed and self-supporting rim (8), the internal face (9) of said rim being overmoulded by said core and its external face (11) being arranged substantially against the periphery of the other of said shells, the porosity of said porous material being arranged in such a way as to allow for the penetration of the foam between said external face of said rim and said periphery of the other of said shells, over a portion of the width of said rim, in such a way as to form a joint (12) contributing the peripheral association of said shells together.

2. Component (1) according to claim 1, at least one shell (2, 3) with a porous material base being partially impregnated in its thickness by the foam (6), in such a way as to rigidify it.

3. Component (1) according to claim 1 or 2, the shell (2) comprising a recessed and self-supporting rim (8) across all of its periphery, the periphery of the shell (3) comprising a protruding rim (14) against which is arranged said recessed rim.

4. Component (1) according to claim 3, the recessed rim (8) formant an acute angle with the peripheral portion (15) of shell (2) that is contiguous to it.

5. Component (1) according to any of claims 1 to 4, said component comprising an insert (13) overmoulded at least in part by the foam (6).

6. Component (1) according to claim 5, the insert passing through one of the shells (2, 3) by the intermediary of an orifice, a portion of said insert being overmoulded by the foam (6) and the other portion protruding in relation to said shell.

7. Component (1) according to any of claims 1 to 6, said component comprising a zone forming a tray (16) and means of associating intended to cooperate with additional means provided in the baggage compartment of the motor vehicle in such a way as to form a baggage cover shelf.

8. Component (1) according to any of claims 1 to 7, one porous shell (2, 3) being of a textile base (40) provided with a back layer (41) made of flexible foam.

9. Component (1) according to any of claims 1 to 8, one shell (2) being provided with a decorative medallion (30) arranged on an orifice (32) of said shell, the periphery of said medallion being provided with a recessed and self-supporting rim (34), the internal face (33) of said rim being overmoulded by the core (10) and its external face (35) being arranged substantially against the periphery of said orifice.

10. Component (1) according to any of claims 1 to 8, one shell (2) being provided with a decorative medallion (30), said medallion being arranged on an orifice (32) of said shell in a peripheral recession (31) provided on the shell (2) receiving said medallion.

11. Method for realising a component (1) according to any of the preceding claims, said method comprising the steps of:
- realising two shells (2, 3) of which at least one of them comprises a recessed and self-supporting rim (8), one at least of said shells being partially porous to the foam (6),
- arranging said shells against the walls of a mould and substantially one against the other in their periphery (4) in such a way as to define an internal space (5);
- injecting into said space a precursor mixture of substantially rigid foam (6) in such a way as to form the core (10) and the joint (12),
- after expansion of said foam, unmould the component (1) obtained.

12. Method according to claim 11, the step of realising a shell (2, 3) having a recessed and self-supporting rim (8) comprising the steps of:
- providing a thermoforming mould comprising a tank (20) and a punch (21) of complementary form, the upper periphery (22) of said punch forming an inclined pan defining said rim,
- providing a blank (23) of material able to be thermoformed,
- arranging the periphery of said blank in a blank holder (24) and heating said blank to its thermoforming temperature,
- thermoforming said blank between said punch and said tank by wedging, by means of at least one wedge shoe (25), the edge of said blank against said upper periphery of said punch, in such a way as to realise a tension of said blank between said blank holder and said shoe,
- applying at least one blade (26), in particular toothed, against said blank at the periphery of said shoe, a spacing (27) being provided behind said blank opposite from said blade, in such a way as to trim the thermoformed blank (23), said blade crossing through said blank by cutting it and penetrating into said spacing,
- removing said sabot and said punch and unmoulding the shell (2, 3) obtained using said blank.

## Patentansprüche

1. Bauteil (1) zum Ausstatten von Kraftfahrzeugen, umfassend zwei Schalen (2, 3) aus Beschichtungsmaterial, die an ihrem Umfang (4a, 4b) im Wesentlichen aneinander angeordnet werden, so dass sie einen Innenraum (5) definieren, wobei der Raum mit einem im Wesentlichen steifen Schaumstoff (6) gefüllt ist, der einen Kern (10) bildet, der die Innenseite (7) der Schalen überformt, wobei mindestens eine der Schalen auf einem für den Schaumstoff teilweise porösen Material basiert, wobei das Bauteil **dadurch gekennzeichnet ist, dass** mindestens ein Teil des Umfangs mindestens einer der Schalen eine zurückgezogene und selbsttragende Einfassung (8) umfasst, wobei die Innenseite (9) der Einfassung von dem Kern überformt wird und ihre Außenseite (11) im Wesentlichen an den Umfang der anderen der Schalen angeordnet ist, wobei die Porosität des porösen Materials derart angeordnet ist, dass sie das Eindringen des Schaumstoffs zwischen der Außenseite der Einfassung und dem Umfang der anderen der Schalen über einen Teil der Breite der Einfassung ermöglicht, um eine Dichtung (12) zu bilden, die zur Umfangsverknüpfung der Schalen miteinander beiträgt.

2. Bauteil (1) nach Anspruch 1, wobei mindestens eine auf porösem Material basierende Schale (2, 3) teilweise in ihrer Dicke mit dem Schaumstoff (6) imprägniert wird, um sie zu versteifen.

3. Bauteil (1) nach Anspruch 1 oder 2, wobei die Schale (2) eine zurückgezogene und selbsttragende Einfassung (8) auf ihrem gesamten Umfang umfasst, wobei der Umfang der Schale (3) eine vorstehende Einfassung (14) umfasst, an welcher die zurückgezogene Einfassung angeordnet ist.

4. Bauteil (1) nach Anspruch 3, wobei die zurückgezogene Einfassung (8) einen spitzen Winkel mit dem umlaufenden Teil (15) der Schale (2) bildet, der an die Einfassung angrenzt.

5. Bauteil (1) nach einem der Ansprüche 1 bis 4, wobei das Bauteil ein Einsatzteil (13) umfasst, das mindestens teilweise von dem Schaumstoff (6) umformt wird.

6. Bauteil (1) nach Anspruch 5, wobei das Einsatzteil über eine Öffnung durch eine der Schalen (2, 3) hindurch geht, wobei ein Teil des Einsatzteils von dem Schaumstoff (6) umformt wird und der andere Teil im Verhältnis zu der Schale vorstehend ist.

7. Bauteil (1) nach einem der Ansprüche 1 bis 6, wobei das Bauteil eine Zone umfasst, die eine Ablage (16) bildet, und Verknüpfungsmittel, die dazu gedacht sind, mit passenden Mitteln zusammenzuwirken, die im Gepäckraum des Kraftfahrzeugs bereitgestellt werden, um eine Gepäckabdeckplatte zu bilden.

8. Bauteil (1) nach einem der Ansprüche 1 bis 7, wobei eine poröse Schale (2, 3) auf einem Textil (40) basiert, das mit einer rückseitigen Schicht (41) aus weichem Schaumstoff versehen ist.

9. Bauteil (1) nach einem der Ansprüche 1 bis 8, wobei eine Schale (2) mit einem dekorativen Medaillon (30) versehen ist, das auf einer Öffnung (32) der Schale angeordnet ist, wobei der Umfang des Medaillons mit einer zurückgezogenen und selbsttragenden Einfassung (34) versehen ist, wobei die Innenseite (33) der Einfassung von dem Kern (10) umformt wird und ihre Innenseite (35) im Wesentlichen an dem Umfang der Öffnung angeordnet ist.

10. Bauteil (1) nach einem der Ansprüche 1 bis 8, wobei eine Schale (2) mit einem dekorativen Medaillon (30) versehen ist, wobei das Medaillon auf einer Öffnung (32) der Schale in einer Umfangsvertiefung (31) angeordnet ist, die auf der das Medaillon aufnehmenden Schale (2) vorgesehen ist.

11. Verfahren zum Herstellen eines Bauteils (1) nach einem der vorhergehenden Ansprüche, wobei das Verfahren folgende Schritte umfasst:
- Herstellen von zwei Schalen (2, 3), von denen mindestens die eine eine zurückgezogene und selbsttragende Einfassung (8) umfasst, wobei mindestens eine der Schalen teilweise für den Schaumstoff (6) porös ist,
- Anordnen der Schalen an den Wänden einer Gießform und im Wesentlichen an ihrem Umfang (4) aneinander, um einen Innenraum (5) zu definieren;
- Einspritzen in den Raum einer im Wesentlichen steifen Schaumstoff-Vorläufermischung (6), um den Kern (10) und die Dichtung (12) zu bilden,
- nach dem Ausdehnen des Schaumstoffs Entformen des erzielten Bauteils (1).

12. Verfahren nach Anspruch 11, wobei der Schritt des Herstellens einer Schale (2, 3), die eine zurückgezogene und selbsttragende Einfassung (8) aufweist, folgende Schritte umfasst:
- Bereitstellen einer Gießform zum Warmformen, die ein Nest (20) und einen passend geformten Stempel (21) umfasst, wobei der obere Umfang (22) des Stempels einen geneigten Abschnitt bildet, der die Einfassung definiert,
- Bereitstellen eines Materialzuschnitts, (23), der zum Warmformen geeignet ist,
- Anordnen des Umfangs des Zuschnitts in einem Niederhalter (24) und Erwärmen des Zuschnitts auf seine Wärmeformtemperatur,
- Wärmeformen des Zuschnitts zwischen dem Stempel und dem Nest, indem mittels mindestens eines Plattierschuhs (25) die Umrandung des Zuschnitts auf den oberen Umfang des Stempels plattiert wird, um eine Spannung des Zuschnitts zwischen dem Niederhalter und dem Schuh zu bewerkstelligen,
- Anlegen mindestens einer Klinge (26), insbesondere einer gezahnten Klinge, an den Zuschnitt am Umfang des Schuhs, wobei ein Spielraum (27) hinter dem Zuschnitt gegenüber der Klinge bereitgestellt wird, um den warmgeformten Zuschnitt (23) frei zu schneiden, wobei die Klinge durch den Zuschnitt hindurch geht und ihn dabei zerschneidet und in den Spielraum eindringt,
- Entfernen des Schuhs und des Stempels und Entformen der aus dem Zuschnitt erzielten Schale (2, 3).
